# FASCICULE DE BREVET EUROPEEN

(11) **EP 3 256 268 B1**
(45) Date de publication et mention de la délivrance du brevet: **12.02.2020**
(21) Numéro de dépôt: 15821146.6
(22) Date de dépôt: 16.12.2015
(51) Int. Cl.: B07C 1/04

(54) **MACHINE DE TRI POSTAL AVEC UNE ENTRÉE D'ALIMENTATION COMPRENANT UN BRAS ROBOTISÉ ET UN CONVOYEUR À PLAT INCLINÉ**
POSTSORTIERMASCHINE MIT EINER EINEN ROBOTERARM UMFASSENDEN ZUFUHR UND EINEM GENEIGTEM FLACHFÖRDERER
POSTAL SORTING MACHINE HAVING A FEEDING ENTRY WITH A ROBOTIC ARM AND AN INCLINED FLAT CONVEYOR

(30) Priorité: 24.12.2014 FR 1463310
(43) Date de publication de la demande: 20.12.2017
(73) Titulaire: Solystic, 92220 Bagneux (FR)
(72) Inventeur: CREST, Karine, 26800 Etoile Sur Rhone (FR); CAMPAGNOLLE, Pierre, 26400 Allex (FR); PETIT, Jacques, 26500 Bourg Les Valence (FR)
(74) Mandataire: Prugneau, Philippe
(86) Numéro de dépôt international: PCT/FR2015/053550
(87) Numéro de publication internationale: WO 2016/102822

(56) Documents cités:
- DE-A1-102007 038 834
- US-A- 5 065 237

## Description

### Domaine technique

Le domaine de l'invention est celui du tri postal.

L'invention concerne plus particulièrement une machine de tri postal comprenant un convoyeur de tri apte à transporter des objets postaux en série le long de sorties de tri et une unité d'alimentation en objets postaux comportant un magasin pour stocker des objets postaux à trier et un séparateur apte à injecter un à un les objets postaux à trier du magasin vers le convoyeur de tri en les disposant en série à pas constant.

### Technique antérieure

On connaît déjà des machines de tri à carrousel à godets pour réaliser du tri mécanisé de courrier mélangé comprenant des articles de courrier plats de petit format et des articles de courrier plats de grand format.

Ces articles de courrier mécanisables peuvent par exemple présenter des dimensions en longueur de 140 à 400mm, en largeur de 90 à 300mm et en épaisseur de 0,5 à 32mm, un poids pouvant aller de 10g à 2kg.

Ces articles de courrier plats mécanisables peuvent être conditionnés sous enveloppe en papier (ouverte ou fermée), sous enveloppe en plastique et même être conditionnés en liasse cerclée.

Le spectre du courrier postal inclut aussi des petits paquets ou colis dont les dimensions, le poids et le conditionnement sont très hétérogènes avec des valeurs qui peuvent aller au delà des valeurs indiquées plus haut.

Ce type d'objets postaux hétérogènes n'est aujourd'hui pas séparé automatiquement. Ces petits paquets sont séparés aujourd'hui semi-manuellement à l'écart des articles de courrier plats homogènes ce qui augmente les coûts du tri postal.

Le document DE-A-10 2007 038 834 décrit toutefois une machine de tri postal, comprenant un convoyeur de tri apte à transporter des objets postaux en série le long de sorties de tri, une unité d'alimentation en objet, post aux comportant un magasin pour stocker des objets postaux à trier et un séparateur comportant un bras robotisé muni d'un préhenseur pneumatique orientable qui est apte à injecter un à un les objets à trier du magasin vers le convoyeur de tri en les disposant en série à pas constant.

### Résumé de l'invention

Le but de l'invention est de proposer une machine de tri postal capable de trier automatiquement des objets postaux hétérogènes du type petits paquets ou colis et qui ont une forme générale parallélépipédique.

Un autre but de l'invention est de proposer une telle machine de tri pour trier en même temps dans les sorties de tri des articles de courrier plats homogènes et des objets postaux hétérogènes de type petits paquets ou colis.

Un autre but de l'invention est encore de proposer une telle machine de tri postal dans laquelle l'encombrement des antennes d'alimentation en articles de courrier plats homogènes et en objets postaux hétérogènes de type petits paquets ou colis reste faible.

L'idée à la base de l'invention est de décharger les objets postaux hétérogènes de type petits paquets ou colis arrivant dans le centre de tri en vrac dans un magasin d'alimentation de la machine de tri et d'utiliser
comme séparateur un bras robotisé qui vient piocher dans le magasin un à un les objets postaux hétérogènes avec un préhenseur pneumatique.

Le bras robotisé est assisté d'un système de vision observant le tas d'objets hétérogènes stockés en vrac dans le magasin pour détecter l'objet postal à séparer du tas d'objets postaux et identifier une face non recouverte de cet objet postal pour permettre au préhenseur du bras robotisé de saisir par cette face de préhension l'objet postal en question.

Plus particulièrement, l'invention a pour objet une machine de tri postal, comprenant un convoyeur de tri apte à transporter des objets postaux en série le long de sorties de tri et une unité d'alimentation en objet postaux comportant un magasin pour stocker des objets postaux à trier et un séparateur apte à injecter un à un les objets postaux à trier du magasin vers le convoyeur de tri en les disposant en série à pas constant, le séparateur comportant un bras robotisé muni d'un préhenseur pneumatique orientable dans un espace à trois dimensions, un capteur de vision apte à observer une tas d'objets postaux stockés en vrac dans le magasin pour produire des données d'image comportant un certain objet postal à séparer du tas d'objets postaux, et une unité de contrôle/commande qui, à partir des données d'image produites par le capteur de vision, est apte à identifier une face de préhension non recouverte du certain objet postal pour une prise de cet objet postal par le préhenseur, l'unité de contrôle/commande étant en outre agencée pour piloter le bras robotisé de façon à venir piocher le certain objet postal par la face de préhension et l'injecter dans le convoyeur de tri, caractérisée en ce qu'une section de convoyage à plat est prévue inclinée avec un bord latéral inférieur et un bord latéral supérieur qui est plus haut que le bord latéral inférieur qui est conçu comme une rive de taquage, et le bras robotisé est conçu pour déposer individuellement chaque objet, séparé du tas d'objets postaux en vrac, dans la section de convoyage à plat inclinée de telle manière que cet objet vienne en taquage par gravité contre le bord inférieur du convoyeur.

Dans cette machine de tri postal, le convoyeur de tri peut comporter des godets adaptés pour transporter chacun au moins un objet postal du type petit paquet ou colis et pour circuler suivant un chemin en boucle fermée au-dessus de réceptacles de sorties de tri, par exemple des bacs amovibles.

Le magasin dans lequel les petits paquets ou colis sont stockés en vrac peut constituer l'entrée d'une antenne d'alimentation automatique spécifique de la machine. Une autre antenne d'alimentation automatique peut être prévue pour recevoir des articles de courrier plats homogènes disposés en pile sur chant. Cette antenne spécifique peut avoir un point d'injection des objets postaux hétérogènes dans les godets du carrousel qui est séparé du point d'injection des articles de courrier plats homogènes.

Avec cet agencement, les articles de courrier plats homogènes et les objets postaux hétérogènes de type petits paquets ou colis peuvent être triés dans les mêmes réceptacles de sortie de tri de la machine en étant posés à plat dans ces réceptacles de sortie de tri.

La machine de tri postal selon l'invention peut encore présenter les particularités suivantes :
- l'unité de contrôle/commande peut être agencée en outre pour détecter que les données d'image produites par le capteur de vision sont insuffisantes pour identifier une face de préhension non recouverte du certain objet postal et en réponse à cette détection provoquer une secousse par avance/recul du magasin pour changer la configuration spatiale du dessus du tas d'objets postaux en vrac.
- le magasin d'alimentation peut comporter une plateforme de stockage du tas d'objets postaux en vrac qui est montée sur un élévateur et ladite unité de contrôle/commande peut être agencée pour commander l'élévateur de façon à maintenir le tas d'objets postaux en vrac à une certaine distance de consigne du capteur de vision.
- la machine peut comporter plusieurs magasins juxtaposés dans chacun desquels des objets postaux hétérogènes sont stockés en tas en vrac, plusieurs bras robotisés associés respectivement aux magasins et plusieurs sections de convoyage à plat inclinées parallèles qui sont alimentées en objets postaux par les bras robotisés respectifs de telle manière que les objets postaux sont disposés alignés en rangée sur les premières sections de convoyage à plat inclinées pour être transférés par rangée d'objets postaux vers une seconde section de convoyage à plat dans laquelle ils sont disposés en série et espacés deux à deux à pas constant.
- les objets alignés en rangée peuvent être transférés vers la seconde section de convoyage par un préhenseur pneumatique du type à dépression.
- le convoyeur de tri peut comporter un convoyeur à plat pour transporter en série à plat les objets postaux espacés deux à deux à pas constant, un carrousel à plateaux basculants qui est alimenté en objets postaux par le convoyeur à plat et qui alimente en objets postaux un carrousel à godets lequel dessert les sorties de tri.

Un exemple de réalisation de la machine de tri postal selon l'invention est décrit ci-après et illustré par les dessins.

### Présentation sommaire des dessins

La figure 1 illustre de façon très schématique en perspective une machine de tri postal selon l'invention.
La figure 2 illustre de façon schématique en perspective une partie amont d'une antenne d'alimentation automatique en objets postaux hétérogènes.
La figure 3 illustre de façon schématique en perspective une partie aval de l'antenne d'alimentation de la figure 2.
La figure 4 illustre plus en détail l'antenne d'alimentation en objets hétérogènes, le carrousel à plateaux et le convoyeur à godets.
La figure 5 est un organigramme qui illustre un certain fonctionnement de la commande du bras robotisé.

### Description des modes de réalisation

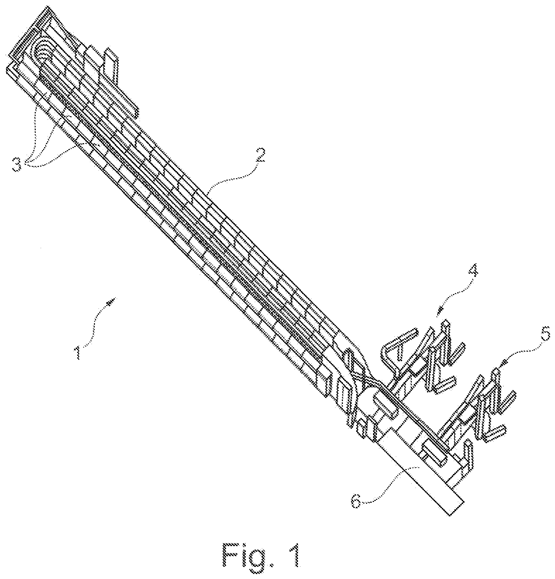

Sur la figure 1, on a illustré une machine de tri postal 1 selon l'invention vue dans son ensemble et comprenant un carrousel de tri à godets 2.

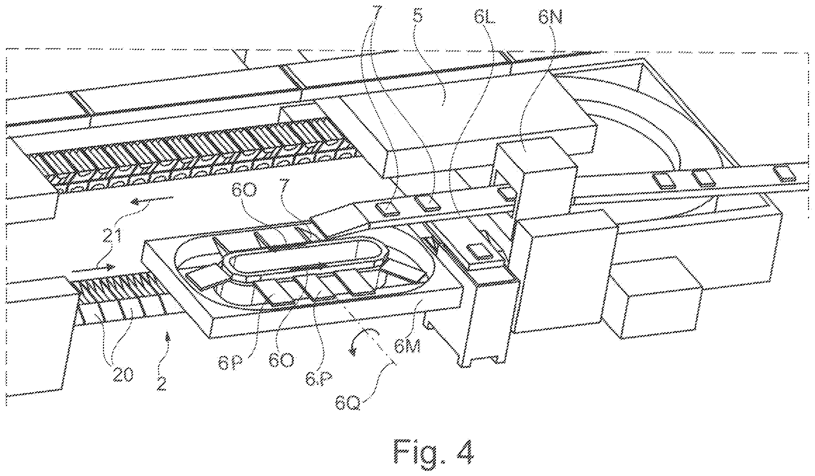

Le carrousel de tri à godets 2 comporte des godets (non représentés sur la figure 1 mais visibles sur la figure 4) qui sont adaptés pour transporter chacun au moins un objet postal qui est ici dans le cadre de l'invention un article de courrier plat ou un petit paquet ou colis.

Les godets du carrousel circulent suivant un chemin en boucle fermée au dessus de réceptacles de tri 3 qui sont ici des bacs amovibles dans lesquelles les objets triés sont placés en superposition à plat.

Sur la figure 1, on a illustré schématiquement deux antennes d'alimentation 4,5 qui alimentent en parallèle le carrousel à godets 2 en articles de courrier plats homogènes de petit et/ou grand format comme cela est connu de l'Homme du métier. Ces articles de courrier plats peuvent être par exemple des lettres, des magazines ou analogues.

Sur la figure 1, la référence 6 désigne une antenne d'alimentation spécifique du carrousel à godets 2 en objets postaux hétérogènes tels que petits paquets ou colis. La machine de tri 1 permet de mélanger un flux de petits paquets avec un flux de courriers et ainsi d'optimiser les coûts du tri postal.

Les antennes d'alimentation 4 et 5 comportent chacune classiquement un magasin dans lequel les articles de courrier sont disposés en pile sur chant, un dépileur en aval du magasin qui dépile et sérialise les articles de courrier à écart constant, un convoyeur à bandes de pincement pour transporter les articles de courrier en série sur chant à écart constant devant une caméra et ensuite dans un injecteur qui injecte chaque article de courrier dans un godet du carrousel.

Comme cela est connu, la caméra forme une image numérique de la face de chaque article de courrier comportant une adresse de distribution et sur la base d'une reconnaissance par OCR de l'adresse de distribution dans l'image, une unité de contrôle de la machine détermine le réceptacle 3 dans lequel l'article de courrier doit être déposé par le carrousel à godets.

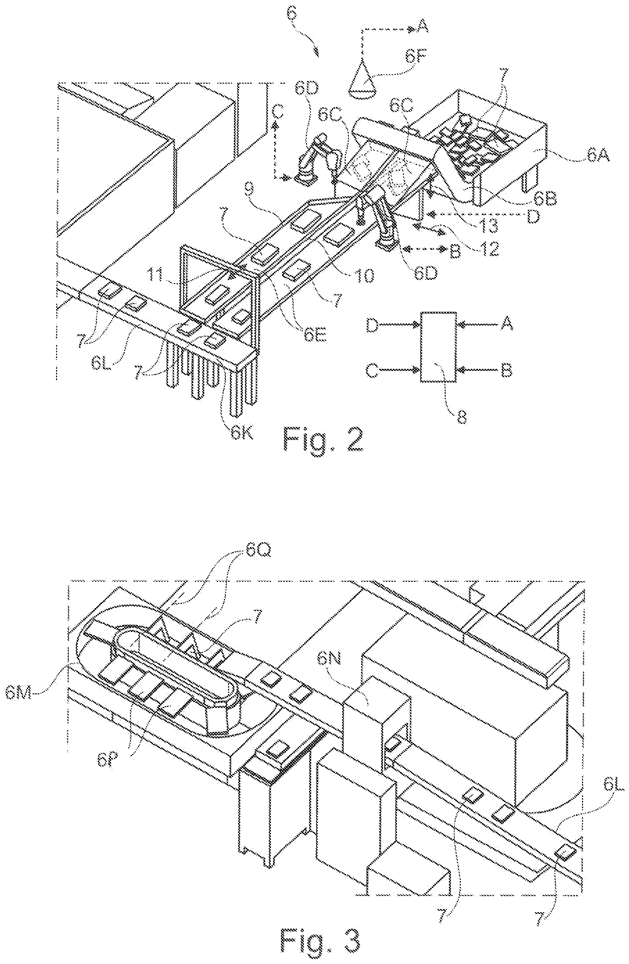

Sur la figure 2, on a illustré plus en détail l'antenne spécifique d'alimentation 6 en objets postaux hétérogènes 7. Cette antenne d'alimentation 6 est adaptée pour alimenter automatiquement en objets postaux 7 le carrousel à godets 2. La cadence de sortie des objets postaux de cette antenne d'alimentation est pilotée par l'unité de contrôle 8 de la machine de tri.

Elle comporte une entrée formée ici par une sorte de trémie 6A dans laquelle les objets postaux 7 sont versés en vrac. Les objets 7 en vrac dans la trémie 6A sont amenés ici par un convoyeur à tapis en pente 6B qui forme la sole de la trémie 6A, dans deux magasins 6C. Dans chaque magasin 6C, les objets 7 sont stockés en vrac comme illustré sur la figure 2.

L'antenne d'alimentation 6 comporte encore un séparateur pour la sérialisation des objets 7, sous la forme d'un bras robotisé, dans le cas présent deux bras robotisé 6D venant piocher un à un les objets 7 respectivement dans les deux magasins 6C.

L'antenne d'alimentation 6 comprend encore ici deux convoyeurs à plat 6E qui sont servis en objets 7 respectivement par les bras robotisé 6D.

Plus particulièrement, chaque convoyeur à plat 6E du type à bande par exemple comporte à une extrémité amont une section de convoyage à plat inclinée avec un bord latéral inférieur 9 et un bord latéral supérieur 10 qui est plus haut que le bord latéral inférieur 9 et qui est conçu comme une rive de taquage.

Chaque bras robotisé 6D est par exemple un bras à six degrés de liberté qui est associé à un capteur de vision 6F et qui est muni d'un préhenseur pneumatique à dépression orientable dans un espace à trois dimensions. Le préhenseur peut être de préférence à géométrie variable, à savoir comporter une plaque centrale munie de plusieurs ventouses et au moins deux volets articlés et repliables sur deux côtés opposés de cette plaque centrale et également munis chacun de plusieurs ventouses. Les ventouses de la plaque centrale et de chaque volet sont prévues pour être commandées sélectivement de sorte que la surface de prise du préhenseur peut correspondre soit à la surface de la plaque centrale, soit à la surface de la plaque centrale augmentée de la surface d'un volet, soit enfin à la surface de la plaque centrale augmentée de la surface des deux volets. Cette surface de prise du préhenseur à géométrie variable permet d'améliorer la prise de paquets ou colis ayant des dimensions hétérogènes. La surface de préhension sur les paquets ou colis est généralement rectangulaire et avec une surface de prise du préhenseur à géométrie variable, il est possible d'adapter la dimension de la surface de prise du préhenseur à celle de la surface de préhension du paquet ou colis sans déborder de celle-ci pour ne pas toucher ou endommager d'autres objets du tas d'objets lors du piochage par le bras robotisé.

L'antenne d'alimentation 6 comprend aussi un second convoyeur à plat 6L sur lequel les objets 7 sont déplacés en série à plat en étant espacés deux à deux avec un pas constant. Le convoyeur à plat 6L est ici perpendiculaire aux convoyeurs à plat 6E.

Comme visible sur la figure 2, les paquets ou colis 7 qui sont déposé par un bras robotisé 6D sur une piste du convoyeur à plat correspondant 6E sont espacés deux à deux à pas constant. En pratique, une ou des images du dessus du tas d'objets 7 en vrac dans un magasin 6C sont prises par le capteur de vision 6F et des données d'image A sont transmises à l'unité 8, laquelle détecte l'objet 7 à séparer du tas d'objets et identifie une face de préhension sur cet objet.

L'unité 8 détermine la surface de cette face de préhension et commande en B et C un des bras robotisés 6D pour adapter la géométrie du préhenseur à cette surface de préhension et saisir avec le préhenseur cet objet 7 par la face de préhension identifiée précédemment.

L'unité 8 synchronise le mouvement du bras robotisé avec le mouvement du convoyeur à plat 6E pour que le bras robotisé pose les objets 7 successivement piochés dans le magasin avec un pas constant entre leur front avant.

Dans le cas d'exemple, les deux bras robotisés 6D fonctionnent avec l'unité 8 et le capteur de vision 6F pour déposer les objets 7 sur les deux pistes parallèles du convoyeur 6E en alignement frontal perpendiculairement à la direction longitudinale du convoyeur 6E.

Selon l'invention, chaque objet 7 est posé sur la partie inclinée du convoyeur 6E de façon à être présenté avec sa grande longueur orientée dans la direction longitudinale du convoyeur 6E et légèrement au-dessus du bord inférieur du convoyeur constituant la rive de taquage de telle sorte que l'objet vient, une fois relâché par le préhenseur, en taquage par gravité contre le bord inférieur du convoyeur ce qui permet de récupérer une dispersion de précision du bras robotisé. Ce bord inférieur peut être fixe ou motorisé.

Un système pneumatique à ventouses qui est monté mobile en avant et en arrière dans le plan horizontal comme illustré par la flèche 11 est disposé à l'extrémité du convoyeur 6E pour saisir ici deux par deux les objets 7 alignés en rangée et les placer sur le convoyeur à plat 6L en les espaçant toujours à pas constant.

Il est entendu qu'une machine de tri selon l'invention peut comporter plus de deux pistes ou convoyeurs à plat 6E parallèles et donc autant de bras robotisés 6C pour alimenter le convoyeur à plat 6L en paquets ou colis espacés deux à deux à pas constant si des débits plus importants sont recherchés.

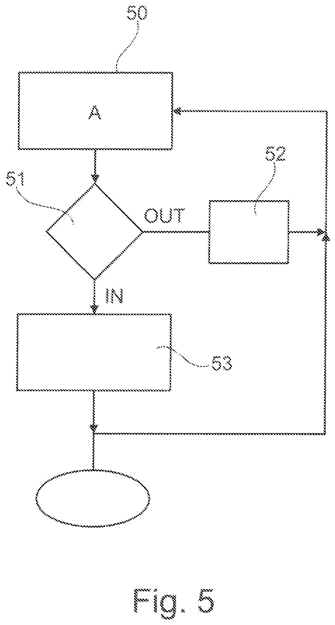

En référence à la figure 5, selon un aspect de la machine de tri selon l'invention, l'unité 8 peut être agencée pour détecter en 51 (figure 5) que les données d'image A produites en 50 (figure 5) par le capteur de vison 6F sont insuffisantes pour identifier une surface de préhension complètement non recouverte sur la paquet ou colis 7 du haut de la pile dans un magasin 6C et en réponse à cette détection provoquer en 52 (figure 5) une secousse par avance/recul rapide du magasin comme illustré par la flèche 12 sur la figure 2 pour changer la configuration spatiale du dessus de la pile d'objets en vrac dans le magasin.

Une ou des nouvelles images du dessus du tas d'objets disposés en vrac dans le magasin est ou sont formées par le capteur de vision et des nouvelles données d'image A sont transmises à l'unité 8 ce qui peut débloquer le processus subséquent de piochage d'un paquet ou colis dans le magasin.

Si l'unité 8 détecte de façon suffisante une face de préhension sur l'objet du dessus de la pile, elle poursuit en 53 (figure 5) son processus de commande du bras robotisé.

Selon un autre aspect de la machine de tri selon l'invention, chaque magasin 6C comporte une plateforme de stockage du tas d'objets 7 en vrac qui est montée sur un élévateur comme un piston hydraulique apte à monter ou descendre la plateforme comme illustré par la flèche 13.

L'unité 8 est agencée pour commander l'élévateur de façon à maintenir le sommet du tas d'objets en vrac à une certaine distance de consigne du capteur de vision au fur et à mesure que les colis sont piochés par le bras robotisé.

Cette distance de consigne correspond à la distance entre le plan de mise au point et la caméra du capteur de vision 6F. La profondeur de champ est choisie faible de sorte que dans les données d'image A transmises à l'unité 8, l'objet 7 au sommet du tas d'objets en vrac apparaît en moins flou que les autres objets du tas d'objets en vrac ce qui permet à l'unité 8 d'identifier plus précisément une face de préhension non recouverte pour cet objet au sommet du tas d'objets.

Sur la figure 3, on a illustré la partie aval de l'antenne d'alimentation 6 avec le convoyeur à plat 6L qui transporte en série à plat à écart constant les objets postaux 7 vers un carrousel 6M à plateaux basculants qui sert à injecter les objets postaux 7 dans les godets du carrousel à godets 2.

Comme visible sur la figure 3, un système de prise d'images 6N est disposé sur le trajet du convoyeur 6L pour former deux images numériques respectivement des deux côtés opposés de chaque objet postal 7.

A partir de ces deux images numériques, l'unité de contrôle pourra évaluer une adresse de distribution pour l'objet postal en question de sorte à diriger cet objet postal dans un bac de sortie de tri correspondant.

Le carrousel à plateaux basculants 6M comporte des plateaux 6P qui sont basculants chacun autour d'un axe de rotation latéral et qui circulent sur un trajet en boucle fermée au dessus des godets du convoyeur à godets 2.

Les plateaux du carrousel 6M sont chargés chacun avec un objet postal 7. Les objets postaux 7 arrivent un à un sur les plateaux du convoyeur 6M par une extrémité libre en pente du convoyeur à plat 6L en surplomb du carrousel 6M.

Comme illustré sur la figure 4, l'axe de basculement 6Q des plateaux du carrousel à plateaux est orienté transversalement à la direction de circulation des plateaux et les godets du carrousel à godets ont une grande dimension (correspondant à la grande longueur des articles de courrier) qui est orientée transversalement à la direction 21 de circulation des godets 20 de sorte que chaque objet postal 7 est transféré par glissement d'un plateau vers un godet dans lequel il est stocké de manière globale sur chant sur son côté de plus grande longueur.

A noter que les plateaux du carrousel 6M se déplacent de manière synchrone avec les godets 20 du carrousel 2. Les objets postaux 7 sont donc injectés par simple gravité dans les godets 20 du carrousel 2. Le point d'injection des objets 7 dans le carrousel 2 est en amont, suivant la direction 21, du point d'injection des articles de courrier provenant de l'antenne d'alimentation 5.

A titre d'exemple, le débit relatif de l'antenne spécifique 6 peut être de un objet postal 7 pour six godets consécutifs du carrousel 2.

A la fin du mouvement de basculement, chaque plateau est remonté automatiquement en position horizontale par un système de rampe.

Il va de soi que la présente invention ne saurait être limitée à la description qui précède d'un de ses modes de réalisation, susceptible de subir quelques modifications sans pour autant sortir du cadre de l'invention.

## Revendications

1. Machine de tri postal, comprenant un convoyeur de tri apte à transporter des objets postaux (7) en série le long de sorties de tri (3) et une unité d'alimentation (6) en objet postaux comportant un magasin (6C) pour stocker des objets postaux à trier et un séparateur apte à injecter un à un les objets postaux à trier du magasin vers le convoyeur de tri en les disposant en série à pas constant, le séparateur comportant un bras robotisé (6D) muni d'un préhenseur pneumatique orientable dans un espace à trois dimensions, un capteur de vision (6F) apte à observer un tas d'objets postaux stockés en vrac dans le magasin pour produire des données d'image comportant un certain objet postal à séparer du tas d'objets postaux, et une unité de contrôle/commande (8) qui, à partir desdites données d'image produites par le capteur de vision, est apte à identifier une face de préhension non recouverte dudit certain objet postal pour une prise de cet objet postal par le préhenseur, ladite unité de contrôle/commande étant en outre agencée pour piloter le bras robotisé de façon à venir piocher ledit certain objet postal par ladite face de préhension et le déposer dans le convoyeur de tri, **caractérisée en ce qu'**une section de convoyage à plat est prévue inclinée avec un bord latéral inférieur (9) et un bord latéral supérieur (10) qui est plus haut que le bord latéral inférieur qui est conçu comme une rive de taquage, et **en ce que** le bras robotisé est conçu pour déposer individuellement chaque objet postal séparé du tas d'objets postaux en vrac, dans la section de convoyage à plat inclinée de telle manière que cet objet vienne en taquage par gravité contre le bord inférieur du convoyeur.

2. Machine de tri postal selon la revendication 1, **caractérisée en ce que** ladite unité de contrôle/commande (8) est en outre agencée pour piloter le bras robotisé de façon à venir piocher dans le magasin avec le préhenseur ledit certain objet postal par ladite face de préhension et l'injecter dans le convoyeur de tri, et **en ce que** l'unité de contrôle/commande est agencée en outre pour détecter que les données produites par le capteur de vision sont insuffisantes pour identifier ledit certain objet postal et en réponse à cette détection provoquer une secousse par avance/recul du magasin pour changer la configuration spatiale du tas d'objets postaux en vrac.

3. Machine de tri postal selon la revendication 1, **caractérisée en ce que** ledit magasin d'alimentation comporte une plateforme de stockage du tas d'objets postaux en vrac qui est montée sur un élévateur (12), et **en ce que** ladite unité de contrôle/commande est agencée pour commander l'élévateur de façon à maintenir le sommet du tas d'objets postaux en vrac à une certaine distance de consigne du capteur de vision.

4. Machine de tri selon l'une quelconque des revendications précédentes, **caractérisée en ce qu'**il comporte plusieurs magasins juxtaposés dans chacun desquels des objets postaux sont stockés en vrac, plusieurs bras robotisés associés respectivement audits magasins et plusieurs sections de convoyage à plat parallèle qui sont alimentées en colis par lesdits bras robotisés respectifs de telle manière que les objets postaux sont disposés alignés en rangée sur lesdites premières sections de convoyage à plat pour être transférés par rangée d'objets vers une seconde section de convoyage (6L) à plat dans laquelle les objets sont disposés en série et espacés deux à deux avec un pas constant.

5. Machine de tri selon la revendication 4, **caractérisée en ce que** les objets postaux alignés en rangée sont transférés vers la seconde section de convoyage à plat par un préhenseur pneumatique (11).

6. Machine de tri selon l'une des revendication précédentes, **caractérisée en ce que** le convoyeur de tri comporte un convoyeur à plat (6L) pour transporter en série à plat les objets postaux (7) espacés deux à deux avec un pas constant, un carrousel à plateaux basculants (6M) qui est alimenté en objets postaux par ledit convoyeur à plat et qui alimente en objets postaux un carrousel à godets (20) lequel dessert les sorties de tri.

## Patentansprüche

1. Postsortiermaschine, umfassend einen Sortierförderer, der in der Lage ist, postalische Gegenstände (7) seriell entlang von Sortierausgängen (3) zu fördern, und eine Versorgungseinheit (6) mit postalischen Gegenständen, umfassend ein Magazin (6C) zum Lagern der zu sortierenden postalischen Gegenstände und einen Separator, der in der Lage ist, die zu sortierenden postalischen Gegenstände vereinzelt von dem Magazin zu dem Sortierförderer einzuleiten, indem diese seriell mit konstantem Schritt abgelegt werden, wobei der Separator einen Roboterarm (6D) mit in einem dreidimensionalen Raum orientierbaren pneumatischen Greifer, einen Bildsensor (6F), der in der Lage ist, einen in dem Magazin gelagerten, durcheinander angeordneten Haufen postalischer Gegenstände zu beobachten, um Bilddaten zu erzeugen, die einen bestimmten, von dem Haufen postalischer Gegenstände zu separierenden postalischen Gegenstand umfassen, und eine Regel-/Steuereinheit (8), die ausgehend von den von dem Bildsensor erzeugten Bilddaten in der Lage ist, eine unbedeckte Greiffläche des bestimmten postalischen Gegenstandes für ein Greifen dieses postalischen Gegenstandes durch den Greifer zu identifizieren, umfasst, wobei die Regel-/Steuereinheit ferner ausgebildet ist, um den Roboterarm derart zu steuern, dass er den bestimmten postalischen Gegenstand durch die Greiffläche ergreift und ihn in den Sortierförderer ablegt,
**dadurch gekennzeichnet,**
**dass** ein Flachfördererabschnitt geneigt vorgesehen ist, mit einem seitlichen unteren Rand (9) und einem seitlichen oberen Rand (10), der höher ist als der seitliche untere Rand, der dazu ausgebildet ist, eine Anschlagkante auszubilden, und dass der Roboterarm ausgebildet ist, um jeden von dem durcheinander angeordneten Haufen postalischer Gegenstände separierten postalischen Gegenstand in den geneigten Flachfördererabschnitt derart individuell abzulegen, dass der Gegenstand durch Schwerkraft gegen den unteren Rand des Förderers anschlägt.

2. Postsortiermaschine nach Anspruch 1, **dadurch gekennzeichnet, dass** die Regel-/Steuereinheit (8) ferner ausgebildet ist zum Steuern des Roboterarms derart, dass in dem Magazin mit dem Greifer der bestimmte postalische Gegenstand durch die Greiffläche ergriffen und in den Sortierförderer eingeleitet wird, und dass die Regel-/Steuereinheit ferner ausgebildet ist, um zu erfassen, wenn die von dem Bildsensor erzeugten Daten unzureichend sind, um den bestimmten postalischen Gegenstand zu identifizieren und in Reaktion auf dieses Erfassen einen Schüttelvorgang durch Vor-/Rückhub des Magazins auszulösen, um die räumliche Konfiguration des durcheinander angeordneten Haufens von postalischen Gegenständen zu verändern.

3. Postsortiermaschine nach Anspruch 1, **dadurch gekennzeichnet, dass** das Versorgungsmagazin eine Lagerplattform des durcheinander angeordneten Haufens postalischer Gegenstände umfasst, die auf einer Hebevorrichtung (12) angebracht ist, und dass die Regel-/Steuereinheit ausgebildet ist zum Steuern der Hebevorrichtung derart, dass die Spitze des durcheinander angeordneten Haufens postalischen Gegenstände in einem bestimmten vorgegebenen Abstand des Bildsensors gehalten ist.

4. Sortiermaschine nach einem der vorhergehenden Ansprüche, **dadurch gekennzeichnet, dass** sie mehrere nebeneinander angeordnete Magazine, in welchen jeweils die postalischen Gegenstände durcheinander angeordnet gelagert sind, mehrere jeweils den Magazinen zugeordnete Roboterarme und mehrere parallele Flachfördererabschnitte, die von den jeweiligen Roboterarmen mit Frachtstücken versorgt werden, umfasst, derart, dass die postalischen Gegenstände ausgerichtet in Reihe auf den ersten Flachfördererabschnitten abgelegt werden, um in Reihe von Gegenständen zu einem zweiten Flachfördererabschnitt (6L) transferiert werden, in dem die Gegenstände seriell und paarweise beabstandet mit einem konstanten Schritt abgelegt werden.

5. Sortiermaschine nach Anspruch 4, **dadurch gekennzeichnet, dass** die in Reihe ausgerichteten postalischen Gegenstände zu dem zweiten Flachfördererabschnitt durch einen pneumatischen Greifer (11) transferiert werden.

6. Sortiermaschine nach einem der vorhergehenden Ansprüche, **dadurch gekennzeichnet, dass** der Sortierförderer einen Flachförderer (6L) zum seriellen liegenden Transportieren der paarweise mit einem konstanten Schritt beabstandeten postalischen Gegenständen (7), ein Karussell mit schwenkenden Platten (6M), das von dem Flachförderer mit postalischen Gegenständen versorgt ist und das ein die Sortierausgänge bedienendes Becherkarussell (20) mit postalischen Gegenständen versorgt, umfasst.

## Claims

1. A postal sorting machine comprising a sorting conveyor suitable for transporting postal articles (7) in series past sorting outlets (3) and a postal article feed unit (6) having a magazine (6C) for storing postal articles to be sorted and a separator that is suitable for injecting the postal articles to be sorted one-by-one from the magazine onto the sorting conveyor while placing them in series at constant pitch, the separator has a robotized arm (6D) provided with a pneumatic pickup that is steerable in three-dimensional space, a vision sensor (6F) suitable for observing a pile of postal articles stored loosely in the magazine to produce image data including a certain postal article to be separated from the pile of loose postal articles, and a monitoring and control unit (8) that, on the basis of said image data produced by the vision sensor, is suitable for identifying a non-covered pickup face of said certain postal article so that said postal article can be gripped by the pickup, said monitoring and control unit also being arranged to control the robotized arm in such a manner as to come and pick up said certain postal article via its pickup face and put it onto the sorting conveyor, said postal sorting machine being **characterized in that** a flat conveying segment is organized to slope sideways, with a lower side edge (9) and an upper side edge (10) that is higher than the lower side edge, which is designed as a jogging edge, and **in that** the robotized arm is designed to put each postal article, separated from the pile of loose postal articles, individually onto the sideways-sloping flat conveying segment in such a manner that said article comes, by gravity, to be jogged against the lower edge of the conveyor.

2. A postal sorting machine according to claim 1, **characterized in that** said monitoring and control unit (8) is also arranged to control the robotized arm in such a manner that its pickup comes to pick up said certain postal article from the magazine via its pickup face and to inject it onto the sorting conveyor, and **in that** the monitoring and control unit is also arranged to detect that the data produced by the vision sensor is insufficient to identify said certain postal article, and to respond to such detection by causing the magazine to shake by moving it forwards and backwards to change the three-dimensional configuration of the pile of loose postal articles.

3. A postal sorting machine according to claim 1, **characterized in that** said feed magazine has a platform for storing the pile of loose postal articles, which platform is mounted on an elevator (12), and **in that** said monitoring and control unit is arranged to control the elevator in such a manner as to keep the top of the pile of loose postal articles a certain setpoint distance away from the vision sensor.

4. A sorting machine according to any preceding claim, **characterized in that** it has a plurality of juxtaposed magazines, in each of which postal articles are stored loose, a plurality of robotized arms associated with respective ones of said magazines, and a plurality of parallel flat conveying segments that are fed with parcels by said respective robotized arms in such a manner that the postal articles are placed such that they are aligned in rows on said first flat conveying segments so that they can be transferred in rows of postal articles to a second flat conveying segment (6L) on which the postal articles are placed in series and spaced apart in pairs at a constant pitch.

5. A sorting machine according to claim 4, **characterized in that** the postal articles aligned in rows are transferred to the second flat conveying segment by a pneumatic pickup (11).

6. A sorting machine according to any preceding claim, **characterized in that** the sorting conveyor has a flat conveyor (6L) for transporting the postal articles (7) in series, flat, and spaced apart in pairs at a constant pitch, and a tipper-platform carrousel (6M) that is fed with postal articles by said flat conveyor and that feeds postal articles to a bin carrousel (20) that serves the sorting outlets.
